# DEMANDE DE BREVET EUROPEEN

(11) **EP 0 898 392 A1**
(43) Date de publication de la demande: **24.02.1999**
(21) Numéro de dépôt: 98402051.1
(22) Date de dépôt: 13.08.1998
(51) Int. Cl.: H04J 3/12

(54) **Procédés de marquage et d'identification commune d'une liaison MIC et d'un intervalle de temps par deux noeuds, liaison MIC et intervalle de temps correspondants**

(30) Priorité: 18.08.1997 FR 9710427
(71) Demandeur: ALCATEL, 75008 Paris (FR)
(72) Inventeur: Robert, Michel, 92170 Vanves (FR); Roberts, Michael, 92200 Neuilly Sur Seine (FR)
(74) Mandataire: El Manouni, Josiane

(57) **Abrégé**

L'invention concerne un procédé de marquage d'une liaison MIC (12) entre deux noeuds (10, 11) d'un réseau, ladite liaison MIC (12) étant du type présentant une structure de trame à N intervalles de temps.

Selon l'invention, le procédé consiste à faire véhiculer par ladite liaison MIC (12) une première information d'identification permettant auxdits noeuds (10, 11) de l'identifier de façon commune.

L'invention concerne également une liaison MIC, un intervalle de temps entre deux noeuds d'un réseau, des procédés d'identification commune d'un intervalle de temps et d'une liaison MIC par deux noeuds.

## Description

Le domaine de l'invention est celui de la transmission de données numériques, et plus particulièrement des liaisons MIC. On rappelle qu'une liaison MIC est un multiplex temporel de canaux à 64 kbit/s utilisant chacun un codage MIC ("modulation par impulsion et codage") ou dérivé (MICDA, SB-MICDA,...).

Plus précisément, l'invention concerne un procédé de marquage d'une liaison MIC ainsi que des procédés d'identification commune, par deux noeuds, d'une liaison MIC et d'un intervalle de temps, respectivement.

D'une façon générale, une liaison MIC est mise en oeuvre entre deux noeuds d'un réseau.

L'invention s'applique, notamment, mais non exclusivement, à un réseau de radiocommunication numérique cellulaire, par exemple du type OSM (pour "Global System for Mobile Communications" en anglais). On rappelle en effet que, classiquement, l'interface A entre le contrôleur de stations de base (ou "BSC" pour "Base Station Controller" en anglais) et le commutateur du service mobile (ou "MSC" pour "Mobile services Switching Center" en anglais) est une interface terrestre constituée de liaisons MIC.

Plus généralement, la présente invention s'applique à tout type de réseau utilisant des liaisons MIC.

Actuellement, chaque noeud identifie localement chaque liaison MIC qu'il utilise. Par conséquent, il existe un risque d'incohérence, lors de la configuration d'une même liaison MIC par les deux noeuds concernés. En effet, il se peut que les deux noeuds n'identifient pas de la même façon une même liaison MIC.

En outre, lorsque deux liaisons MIC relient un même couple de noeuds, ils se peut que les configurations erronées se croisent. En effet, pour l'une des deux liaisons MIC, le premier noeud pense qu'il s'agit de la liaison MIC n°1 alors que le second noeud pense qu'il s'agit de la liaison MIC n°2. Inversement, pour l'autre des deux liaisons MIC, le premier noeud pense qu'il s'agit de la liaison MIC n°2 alors que le second noeud pense qu'il s'agit de la liaison MIC n°1.

Ainsi, dans le cas de configurations croisées, bien que l'appel soit correctement initié entre deux correspondants, les données de parole ne prennent pas le bon chemin entre ces deux correspondants. Il y a donc perte de données et la seule solution est d'interrompre les deux communications croisées. On notera que l'appel est néanmoins facturé puisque (apparemment) correctement établi.

La détection de telles erreurs de configuration est très difficile, voire impossible à mettre en oeuvre. En effet, seuls les utilisateurs sont en mesure de détecter les défauts d'aiguillage. Ces défauts sont transparents vis-à-vis des noeuds du réseau, pour qui, on le rappelle, tout semble correct. En outre, il n'est pas possible d'enregistrer le problème dans le système puisque, lorsque les utilisateurs appellent l'opérateur, ils ont relâché la communication sur laquelle le problème s'est manifesté.

En fait, la seule solution actuelle de détection de ces problèmes de configuration repose sur des relevés qu'effectue un opérateur de maintenance, suite à une plainte d'un utilisateur. Cet opérateur vient effectuer manuellement des mesures directement auprès de chaque noeud, afin de localiser l'erreur de configuration.

Cette solution présente plusieurs inconvénients. En effet, elle exige de l'utilisateur qu'il prévienne l'opérateur de l'existence de ces défauts. De plus, elle nécessite l'intervention d'un opérateur de maintenance qualifié. Cette intervention est longue à mettre en oeuvre et entraîne l'immobilisation des circuits concernés, empêchant ainsi toute communication qui utiliserait le ou les noeud(s) correspondant(s).

L'invention a notamment pour objectif de pallier ces différents inconvénients de l'état de la technique.

Plus précisément, l'un des objectifs de la présente invention est de fournir des procédés de marquage et d'identification commune d'une liaison MIC par deux noeuds d'un réseau, permettant d'éviter tous les problèmes de configurations précités, et notamment de configurations croisées, et donc d'optimiser l'allocation des ressources disponibles.

Un objectif particulier de l'invention est de fournir de tels procédés de marquage et d'identification simples à mettre en oeuvre, rapides, peu coûteux, n'entraînant aucun blocage de circuits au sein des noeuds concernés, et ne nécessitant pas l'intervention d'un opérateur de maintenance.

Un autre objectif de l'invention est de fournir de tels procédés de marquage et d'identification permettant d'effectuer, de façon simple et sans équivoque, les diverses configurations, et d'enregistrer les erreurs avant leur correction.

L'invention a encore pour objectif de fournir un procédé d'identification d'un intervalle de temps d'une liaison MIC.

Ces différents objectifs, ainsi que d'autres qui apparaîtront par la suite, sont atteints selon l'invention à l'aide d'un procédé de marquage d'une liaison MIC entre deux noeuds d'un réseau, ladite liaison MIC étant du type présentant une structure de trame à N intervalles de temps, procédé consistant à faire véhiculer par ladite liaison MIC une première information d'identification permettant auxdits noeuds de l'identifier de façon commune.

Le principe général de l'invention repose sur l'ajout, dans la liaison MIC, d'une information d'identification la concernant, de façon que cette information transite entre les deux noeuds concernés par cette liaison MIC. Ainsi, comme expliqué en détail par la suite, les noeuds concernés peuvent identifier de façon commune la liaison MIC employée. L'information d'identification peut elle-même être constituée d'une pluralité de sous-information(s).

Il est clair qu'une même liaison MIC peut traverser successivement plusieurs noeuds. Le principe de l'invention s'applique alors à chaque couple de deux noeuds successifs.

Dans un mode de réalisation particulier de l'invention, ladite première information d'identification est portée par l'intervalle de temps occupant le premier rang de ladite structure de trame.

Selon une variante avantageuse, ladite première information d'identification est portée par un intervalle de temps de ladite structure de trame occupant un rang autre que le premier rang.

On rappelle que le premier intervalle de temps porte notamment le mot de verrouillage de trame ainsi que des bits d'exploitation réservés à des usages nationaux ou internationaux. Les autres intervalles de temps portent des données (de parole par exemple) ou de la signalisation.

Préférentiellement ladite première information d'identification est un nunéro d'identification prédéterminé.

Dans un mode de réalisation avantageux de l'invention, au moins un intervalle de temps, dit intervalle de temps marqué, de ladite structure de trame porte une seconde information permettant auxdits noeuds de l'identifier de façon commune.

De cette façon, et comme expliqué en détail par la suite, les deux noeuds peuvent identifier de façon commune chaque intervalle de temps marqué. Ceci est utile notamment lorsque les intervalles de temps ont subi un brassage (par exemple par passage dans une matrice de connexion).

De façon préférentielle, ladite seconde information d'identification est le rang dudit intervalle de temps marqué dans ladite structure de trame.

De façon préférentielle, ledit réseau est un réseau de radiocommunication numérique cellulaire et lesdits noeuds constituent un couple de noeuds appartenant au groupe comprenant :
- un commutateur du service mobile (MSC) et un contrôleur de stations de base (BSC);
- un commutateur du service mobile (MSC) et un transcodeur (TRAU);
- un contrôleur de stations de base (BSC) et un transcodeur (TRAU).

Il est clair cependant que cette liste n'est pas limitative.

L'invention concerne également une liaison MIC entre deux noeuds d'un réseau, du type présentant une structure de trame à N intervalles de temps. Cette liaison MIC véhicule une première information d'identification permettant auxdits noeuds de l'identifier de façon commune.

Ainsi, l'invention utilise la liaison MIC elle-même comme support de l'information qui la concerne. L'invention est donc simple à mettre en oeuvre, peu coûteuse et ne nécessite qu'une légère modification par rapport à la liaison MIC connue.

L'invention concerne également un intervalle de temps d'une liaison MIC entre deux noeuds d'un réseau, ladite liaison MIC étant du type présentant une structure de trame à N intervalles de temps. Cet intervalle de temps porte une seconde information d'identification permettant auxdits noeuds de l'identifier de façon commune.

L'invention concerne encore un procédé d'identification commune d'une liaison MIC par deux noeuds entre lesquels est établie ladite liaison MIC, chacun desdits noeuds, dits premier et second noeuds, disposant d'une première information d'identification de ladite liaison MIC. Ce procédé comprend les étapes suivantes :
- le premier noeud place dans ladite liaison MIC la première information d'identification dont il dispose;
- le second noeud reçoit ladite première information d'identification dont dispose le premier noeud et la compare à la première information d'identification dont il dispose, de façon à s'assurer qu'elles sont identiques.

En d'autres termes, les noeuds détectent immédiatement si leurs configurations respectives sont cohérentes, c'est-à-dire s'ils ont bien configuré la même liaison MIC de la même façon.

On supprime également tous risques de configurations croisées : si une liaison MIC n°1 n'est pas vue comme telle par les deux noeuds (par exemple, si l'un des noeuds la voit comme une liaison MIC n°2), alors l'un des deux (ou les deux) noeuds est (sont) reconfiguré(s) de façon adéquate.

Il est clair que, dès lors que les noeuds ont détecté une inégalité (c'est-à-dire une erreur de configuration), différentes procédures peuvent être envisagées pour remédier au problème. Par exemple, le second noeud peut aligner sa configuration sur celle du premier noeud.

L'invention concerne encore un procédé d'identification commune d'un intervalle de temps d'une liaison MIC par deux noeuds entre lesquels est établie ladite liaison MIC, chacun desdits noeuds, dits premier et second noeuds, disposant d'une seconde information d'identification dudit intervalle de temps. Ce procédé comprend les étapes suivantes :
- le premier noeud place dans ledit intervalle de temps ladite seconde information d'identification dont il dispose ;
- le second noeud reçoit ladite seconde information d'identification dont dispose le premier noeud et la compare à la seconde information d'identification dont il dispose, de façon à s'assurer qu'elles sont identiques.

D'autres caractéristiques et avantages de l'invention apparaîtront à la lecture de la description suivante de deux modes de réalisation préférentiels de l'invention, donnés à titre de simples exemples indicatifs et non limitatifs, et des dessins annexés, dans lesquels :
- la figure 1 présente de façon schématique un premier exemple de deux noeuds, permettant d'expliciter la présente invention ;
- la figure 2 présente de façon schématique un second exemple de deux liaisons MIC entre trois noeuds successifs, permettant d'expliciter la présente invention ;
- la figure 3 est un schéma simplifié d'une structure de trame classique d'une liaison MIC, permettant de préciser un mode de réalisation particulier de l'invention ;
- la figure 4 est un schéma simplifié d'une structure classique d'un intervalle de temps de la trame de la figure 3, permettant de préciser un mode de réalisation particulier de l'invention ;
- la figure 5 illustre un organigramme simplifié d'un mode de réalisation particulier d'un procédé selon l'invention d'identification commune d'une liaison MIC par deux noeuds ;
- la figure 6 illustre un organigramme simplifié d'un mode de réalisation particulier d'un procédé selon l'invention d'identification commune d'un intervalle de temps d'une liaison MIC par deux noeuds.

Dans la suite de la description, on se place dans le cas particulier d'un réseau de radiocommunication numérique cellulaire selon le standard GSM. Il est clair que l'homme du métier saura étendre les principes évoqués ci-dessous à d'autres types de réseaux utilisant des liaisons MIC.

On rappelle que, de façon classique, dans un système de radiocommunication numérique cellulaire de type GSM, chaque station de base (ou"BTS" pour "Base Transceiver Station" en anglais) est reliée à un contrôleur de stations de base (ou "BSC" pour "Base Station Controller" en anglais). Un BSC et les BTS qui lui sont reliées constituent un sous-système radio (ou "BSS" pour "Base Station System" en anglais). Chaque BSC est relié à un commutateur du service mobile (ou "MSC" pour "Mobile services Switching Center" en anglais). Parfois, un transcodeur (ou "TRAU" pour "Transcoding Rate Adoption Unit" en anglais) s'intercale entre un MSC et un BSC.

L'invention vise donc notamment à obtenir une configuration commune d'une liaison MIC par les noeuds du réseau concernés par cette liaison MIC.

Le principe général de l'invention repose sur l'ajout, dans la liaison MIC elle-même, d'une information d'identification la concernant. Ainsi, cette information transite par tous les noeuds concernés par cette liaison MIC, et ces derniers sont informés de l'identité (par exemple son numéro) de cette liaison MIC.

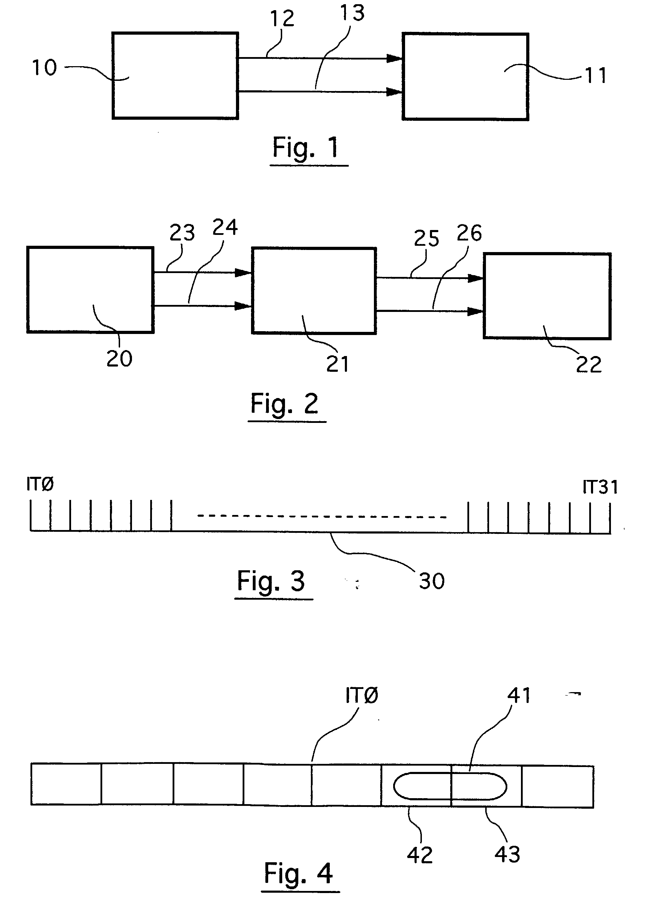

On présente maintenant, en relation avec le schéma simplifié de la figure 1, le fonctionnement d'un mode de réalisation particulier de l'invention.

Cette figure 1 présente, de façon schématique, deux liaisons MIC 12,13 entre deux noeuds 10,11, tels que, par exemple un BSC 10 et un MSC 11. On notera que dans un souci de simplification, les liaisons MIC sont représentées et décrites dans un seul sens. Comme déjà expliqué ci-dessus, il existe un risque d'incohérence lors de la configuration des deux liaisons MIC par deux noeuds (configurations croisées par erreur).

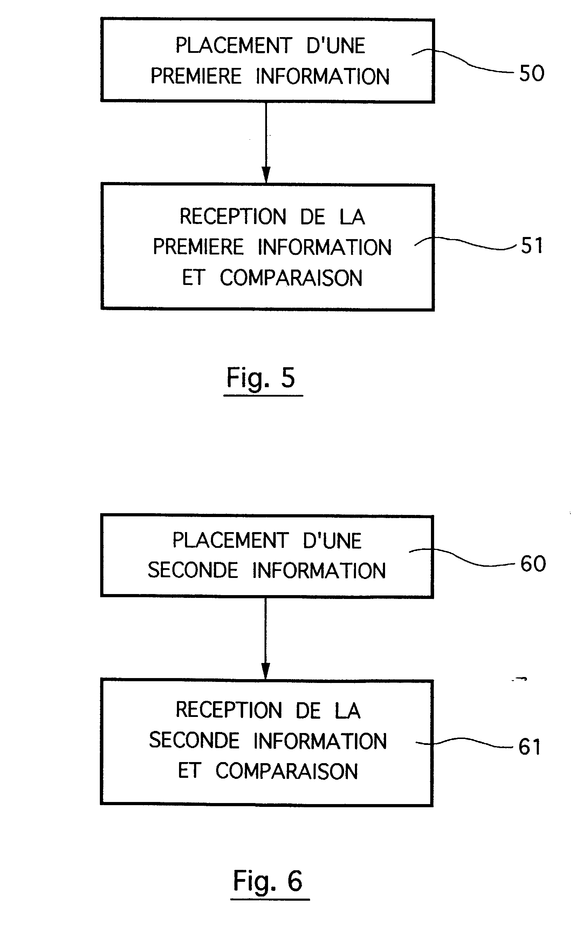

Notamment afin d'éviter cette erreur, selon l'invention, chaque liaison MIC 12,13 véhicule entre ces deux noeuds 10,11 une première information d'identification permettant à ces deux noeuds de l'identifier de façon commune (cf explications du procédé d'identification selon l'invention, explicité ci-dessous en relation avec la figure 5).

Chaque liaison MIC 12,13 présente une structure de trame. Comme présenté sur la figure 3, chaque trame 30 comprend généralement 32 intervalles de temps, IT0 à IT31. La première infonnation d'identification, propre à la présente invention, est par exemple portée par l'intervalle de temps IT0 occupant le premier rang de la structure de trame. Il est clair que, selon une variante, cette première information peut être portée par l'un quelconque des autres intervalles de temps de IT1 à IT31.

Comme présenté sur la figure 4, l'intervalle de temps IT0 comprend généralement 8 bits. La seconde information d'identification 41, propre à l'invention, est par exemple portée par les sixième et septième bits 42 et 43. Chaque intervalle de temps de cette liaison MIC peut lui-même être marqué en portant une seconde information (par exemple son rang dans la trame 30).

La figure 2 présente, de façon schématique, deux liaisons MJC entre trois noeuds successifs 20 à 22.

Ces trois noeuds sont par exemple, un contrôleur de stations de base 20 (ou "BSC"), un transcodeur 21 (ou "TRAU" pour "transooding Rate Adoption Unit" on anglais) et un commutateur du service mobile 22 (ou "MSC").

Le BSC 20 et le TRAU 21 s'échangent des données via deux liaisons MIC 23 et 24, De même, le TRAU 21 et le MSC 22 s'échangent des données via deux autres liaisons MIC 25 et 26. Cela représente deux fois plus de risques de configurations croisées que dans le cas de la figure 1.

On réitère les mêmes opérations que celles décrites pour les deux noeuds de la figure 1, aux premier et second noeuds 20 et 21, pour les liaisons MIC 23 et 24, puis, aux second et troisième noeuds 21, 22, pour les liaisons MIC 25 et 26. Il est à noter que pour que le TRAU puisse lire l'information d'identification, celle-ci doit être portée par l'un des IT1 à IT31 (ces intervalles de temps sont dits "inband").

On présente maintenant, en relation avec l'organigramme de la figure 5, un mode de réalisation particulier du procédé selon l'invention d'identification commune d'une liaison MIC telle que décrite précédemment. On suppose ici que chaque noeud dispose d'une première information d'identification de la liaison MIC qu'il utilise.

Ce procédé comprend notamment les étapes suivantes:
- le premier noeud (noeud origine) place (50) dans la liaison MIC une première information d'identification dont il dispose;
- le second noeud (noeud destinataire) reçoit (51) la première information d'identification dont dispose le premier noeud et la compare à la première information d'identification dont il dispose, de façon à s'assurer qu'elles sont identiques.

En cas d'inégalité, le noeud destinataire sait qu'il y a une erreur de configuration concernant cette liaison MIC. Il convient alors de mettre en oeuvre une procédure adéquate, dans l'un ou l'autre des noeuds, pour résoudre ce problème.

Ainsi, en reprenant l'exemple de la figure 1, pour la liaison MIC référencée 12, la première information d'identification, envoyée au MSC 11 (correspondant au noeud destinataire), correspond par exemple au numéro de la liaison MIC 12 employé par le BSC 10. Lorsque le noeud destinataire, ici le MSC 11, reçoit cette première information, il l'analyse et compare le numéro d'identification utilisé par le BSC au numéro que lui-même utilise. Le MSC 11 peut ainsi s'assurer que la liaison MIC qu'il utilise est la bonne. Si tel n'est pas le cas, le MSC 11 peut modifier sa configuration de façon à utiliser la même liaison MIC que le BSC. Par exemple, le MSC 11 cherche la liaison MIC correcte dans une bibliothèque contenant toutes les liaisons MIC qu'il peut utiliser.

On présente maintenant en relation avec l'organigramme de la figure 6, un procédé d'identification commune d'un intervalle de temps d'une liaison MIC telle que décrite précédemment. On suppose ici que chaque noeud dispose d'une seconde information d'identification de l'intervalle de temps que l'on cherche à identifier de façon commune.

Ce procédé comprend notamment les étapes suivantes :
- le premier noeud (noeud origine) place (60) dans l'intervalle de temps une seconde information d'identification dont il dispose;
- le second noeud (noeud destinataire) reçoit (61) la seconde information d'identification dont dispose le premier noeud et la compare à la seconde information d'identification dont il dispose, de façon à s'assurer qu'elles sont identiques.

En cas d'inégalité le noeud destinataire sait qu'il y a une erreur de configuration concernant cet intervalle de temps. Il convient alors de mettre en oeuvre une procédure adéquate, dans l'un ou l'autre des deux noeuds, pour résoudre ce problème.

D'une façon générale, la présente invention permet de détecter une incohérence de configuration au niveau d'une liaison MIC, et éventuellement au niveau d'un intervalle de temps de cette liaison MIC. Il est clair que dès lors que cette incohérence est détectée, il est aisé pour l'homme du métier de prévoir et mettre en oeuvre tout type de technique de correction et de suppression de ces incohérences.

## Revendications

1. Procédé de marquage d'une liaison MIC (12) entre deux noeuds (10, 11) d'un réseau, ladite liaison MIC (12) étant du type présentant une structure de trame (30 à N intervalles de temps, caractérisé en ce qu'il consiste à faire véhiculer par ladite liaison MIC (12) une première information d'identification permettant auxdits noeuds (10,11) de l'identifier de façon commune.

2. Procédé selon la revendication 1, caractérisé en ce que ladite première information d'identification est portée par l'intervalle de temps (IT0) occupant le premier rang de ladite structure de trame (30).

3. Procédé selon la revendication 1, caractérisé en ce que ladite première information d'identification est portée par un intervalle de temps (IT1 à IT31) de ladite structure de trame (30) occupant un rang autre que le premier rang.

4. Procédé selon l'une quelconque des revendications 1 à 3, caractérisé en ce que ladite première information d'identification est un numéro d'identification prédéterminé.

5. Procédé selon l'une quelconque des revendications 1 à 4, caractérisé en ce qu'au moins un intervalle de temps, dit intervalle de temps marqué, de ladite structure de trame (30) porte une seconde information permettant auxdits noeuds (10, 11) de l'identifier de façon commune.

6. Procédé selon la revendication 5, caractérisé en ce que ladite seconde information d'identification est le rang dudit intervalle de temps marqué dans ladite structure de trame (30).

7. Procédé selon l'une quelconque des revendications 1 à 6, caractérisé en ce que ledit réseau est un réseau de radiocommunication numérique cellulaire,
et en ce que lesdits noeuds constituent un couple de noeuds appartenant au groupe comprenant :
- un commutateur du service mobile (11) et un contrôleur de stations de base (10);
- un commutateur du service mobile (22) et un transcodeur (21);
- un contrôleur de stations de base (20) et un transcodeur (21).

8. Liaison MIC entre deux noeuds (10, 11) d'un réseau, du type présentant une structure de trame (30) à N intervalles de temps, caractérisée en ce qu'elle véhicule une première information d'identification permettant auxdits noeuds (10, 11) de l'identifier de façon commune.

9. Intervalle de temps (31) d'une liaison MIC entre deux noeuds (10, 11) d'un réseau, ladite liaison MIC étant du type présentant une structure de trame (30) à N intervalles de temps, caractérisé en ce qu'il porte une seconde information d'identification permettant auxdits noeuds (10, 11) de l'identifier de façon commune.

10. Procédé d'identification commune d'une liaison MIC par deux noeuds entre lesquels est établie ladite liaison MIC, chacun desdits noeuds, dits premier et second noeuds, disposant d'une première infonnation d'identification de ladite liaison MIC, caractérisé en ce qu'il comprend les étapes suivantes :
- le premier noeud place (50) dans ladite liaison MIC la première information d'identification dont il dispose;
- le second noeud reçoit (51) ladite première information d'identification dont dispose le premier noeud et la compare à la première information d'identification dont il dispose, de façon à s'assurer qu'elles sont identiques.

11. Procédé d'identification commune d'un intervalle de temps d'une liaison MIC par deux noeuds entre lesquels est établie ladite liaison MIC, chacun desdits noeuds, dits premier et second noeuds, disposant d'une seconde information d'identification dudit intervalle de temps,
caractérisé en ce qu'il comprend les étapes suivantes :
- le premier noeud place (60) dans ledit intervalle de temps ladite seconde information d'identification dont il dispose;
- le second noeud reçoit (61) ladite seconde information d'identification dont dispose le premier noeud et la compare à la seconde information d'identification dont il dispose, de façon à s'assurer qu'elles sont identiques.
